# EUROPÄISCHE PATENTSCHRIFT

(11) **EP 2 229 311 B1**
(45) Veröffentlichungstag und Bekanntmachung des Hinweises auf die Patenterteilung: **15.08.2012**
(21) Anmeldenummer: 08857546.9
(22) Anmeldetag: 08.12.2008
(51) Int. Cl.: B62J 7/04

(54) **ANORDNUNG ZUM HALTEN VON TASCHEN AN EINEM FAHRRAD**
ARRANGEMENT FOR HOLDING BAGS ON A BICYCLE
SYSTEME POUR MAINTENIR DES SACS SUR UN VELO

(30) Priorität: 07.12.2007 DE 102007059219
(43) Veröffentlichungstag der Anmeldung: 22.09.2010
(73) Patentinhaber: Hajiani, Darius Matthew, 10999 Berlin (DE)
(72) Erfinder: Hajiani, Darius Matthew, 10999 Berlin (DE)
(74) Vertreter: Reininger, Jan Christian
(86) Internationale Anmeldenummer: PCT/EP2008/010391
(87) Internationale Veröffentlichungsnummer: WO 2009/071328

(56) Entgegenhaltungen:
- DE-U1- 20 101 867
- FR-A- 893 192
- US-A1- 2004 011 836

## Beschreibung

Die Erfindung betrifft eine Anordnung zum Halten von Taschen an einem Fahrrad.

Unter Taschen werden hier grundsätzlich beliebige Behälter verstanden, die wiederum Gegenstände aufnehmen können und die an einem Gegenstand, wie einem Materialvorsprung, einem Haken oder einem Knopf, aufgehängt werden können, so dass die darin aufgenommenen Gegenstände nicht herausfallen. Die Erfindung ist von besonderem Vorteil für Einkaufstaschen, z.B. Plastiktüten.

Für Fahrräder sind verschiedenartige Konstruktionen bekannt, die an einem Standardgepäckträger, welcher an der Oberseite des Hinterrades angebracht ist, angeordnet und befestigt werden können. Z.B. sind die Fahrradtaschen zu nennen, die auf einer Seite oder beidseits des Vorderoder Hinterrades angeordnet werden, wobei eine sattelartige Verbindung der beiden Taschen auf dem Gepäckträger aufliegt.

Solche Konstruktionen sind verhältnismäßig aufwendig in der Herstellung, u.U. speziell auf die Abmessungen eines bestimmten Fahrrades oder Gepäckträgers anzupassen und werden teilweise zu sehr hohen Preisen an die Fahrradnutzer verkauft. Wie auch bei anderen kostenträchtigen Anbauten an Fahrrädern müssen spezielle Maßnahmen gegen Diebstahl ergriffen werden oder der schmerzhafte Verlust in Kauf genommen werden. Wenn z.B. Fahrradtaschen nach dem Abstellen des Fahrrades mit in einen Einkaufsladen genommen werden, ist der Nutzer durch das Volumen und das Gewicht der Taschen in seiner Bewegungsfreiheit eingeschränkt.

Außerdem sind diverse spezielle Gepäckträger für Fahrräder bekannt, die gegenüber einem Standard-Gepäckträger, welcher aus Stäben zusammengesetzt ist, den Transport von nicht formstabilen Taschen erleichtert. In diesen Fällen werden die Taschen aber auf dem Gepäckträger aufgestellt. Die Taschen müssen gegen ein Herunterfallen gesichert werden, z.B. mit Spanngurten. Außerdem wird der Gesamtschwerpunkt von Fahrrad und Last erhöht, was die Fahrstabilität verringert.

Aus der US 2004/0011836 A1, dem nächstliegenden Stand der Technik, ist eine Anordnung zum Halten von Taschen an einem Fahrrad bekannt, die ein Fixiernetz aufweist, mit dem sich eine an der Anordnung aufgehängte Tasche gegen unerwünschtes Baumeln sichern lässt.

Aus der FR 893 192 ist ein Fahrradgepäckträger zur Beförderung schwerer Lasten bekannt, der ebenfalls sicherstellt, dass ein unerwünschtes Baumeln von zu befördernden Lasten unterbunden wird.

Die DE 201 01 867 U1 beschreibt einen Fahrradgepäckträger, der ausklappbare Elemente umfasst, auf denen sich Gepäckstücke sichern lassen.

Es ist eine Aufgabe der vorliegenden Erfindung, eine Anordnung zum Halten von Taschen an einem Fahrrad anzugeben, so dass der Gesamtschwerpunkt aus Fahrrad und Last möglichst nicht gegenüber dem Schwerpunkt des Fahrrads allein erhöht wird. Außerdem sollen die für die Anordnung benötigten Teile ein möglichst geringes Gewicht aufweisen, einfach und kostengünstig herzustellen sein und möglichst auf einfache Weise an dem Fahrrad befestigt werden können.

Es wird vorgeschlagen, seitlich an einem Rad des Fahrrades ein plattenförmiges Element, das aus ein oder mehreren Teilen bestehen kann, anzuordnen. Unter seitlich des Rades wird verstanden, dass sich das plattenförmige Element in einer Richtung senkrecht zu der Rotationsebene des Rades befindet, wobei unter der Rotationsebene die kreisförmige Fläche verstanden wird, die bei der Rotation des Rades von sich rotierenden Teilen in der Mittelebene des Rades überstrichen wird. Dabei kann sich das plattenförmige Element teilweise über den Rand der Rotationsebene hinaus erstrecken, z.B. nach oben auf die Höhe eines über dem Hinterrad des Fahrrads angeordneten Gepäckträgers.

Das plattenförmige Element schützt davor, dass seitlich an der dem Rad abgewandten Seite angeordnete Taschen in Kontakt mit dem rotierenden Rad gelangen. Bei einem Speichenrad kann das plattenförmige Element daher als Speichenschutz bezeichnet werden. Außerdem verhindert das plattenförmige Element einen Kontakt mit anderen Teilen, z. B. einer Gangschaltung, die seitlich des Rades angeordnet sind.

Bei dem plattenförmigen Element kann es sich z. B. um eine Stabkonstruktion handeln, die an Rahmenteilen des Fahrrads befestigt wird. Gemeinsam mit meist bereits als Teil des Fahrradrahmens vorhandenen Streben oder Stäben eines Gepäckträgers kann eine solche Stabkonstruktion die zwischen den Rahmenteilen vorhandenen Freiräume so unterteilen und verkleinern, dass die Tasche nicht mehr in Kontakt mit dem Rad kommen kann.

Unter einem plattenförmigen Element wird ein Gegenstand verstanden, der eine etwa in einer Ebene verlaufende Oberfläche aufweist, wobei die Längserstreckung der Ebene in zwei senkrecht zueinander verlaufenden Richtungen jeweils sehr viel größer ist als die Dicke des Gegenstandes. Dabei kann die Oberfläche einfach oder mehrfach unterbrochen sein, bereichsweise in einer anderen Richtung verlaufen (z.B. eine Ausstülpung oder Ausnehmung aufweisen), verstärkt sein (z.B. mit Stegen oder Rippen) oder in anderer Weise von der idealen Form einer ebenen, planparallelen Platte abweichen. Insbesondere ist es auch möglich, dass die Dicke des plattenförmigen Elements variiert. Z. B. ist in dem montierten Zustand des plattenförmigen Elements die Dicke am oberen Ende kleiner als zumindest in einem Teilbereich der unteren Hälfte des plattenförmigen Elements. Hierauf wird noch näher eingegangen. Bei einer besonderen Ausgestaltung kann das plattenförmige Element faltbar sein oder aufrollbar sein, sodass es auf einfache Weise von dem Fahrrad entfernt und transportiert werden kann, wenn es nicht in Gebrauch ist. Unter dem Rahmen des Fahrrads werden alle Teile verstanden, die bei Bewegung des Fahrrads nicht mit den beiden Rädern mitrotieren, aber fest verbaut sind. Dazu gehören insbesondere Rohre, Stäbe, Streben, die alle üblicherweise aus Metall gefertigt sind und den eigentlichen Tragrahmen des Fahrrades bilden, aber auch fest daran angebrachte Anbauteile wie ein Gepäckträger mit einer Gepäckauflagefläche oberhalb des Hinterrades und die zur Befestigung des Gepäckträgers verwendeten zusätzlichen Abstützungen, insbesondere eine Abstützung zur Nabe des Hinterrades.

Eine solche Abstützung und die üblicherweise vorhandenen Rahmenteile im Bereich des Hinterrades reichen aber nicht dazu aus, einen mechanischen Kontakt des Rades und einer Tasche seitlich des Rades zu verhindern. Daher ist zusätzlich das plattenförmige Element vorgesehen. Im Folgenden wird wiederholt auf die Anordnung des plattenförmigen Elements eingegangen, insbesondere wie das plattenförmige Element am Gepäckträger befestigt werden kann und wo es positioniert ist.

Die erfindungsgemäße Anordnung zum Halten von Taschen an einem Fahrrad weist außer dem plattenförmigen Element auch Befestigungsmittel zum Befestigen des plattenförmigen Elements an einem Gepäckträger des Fahrrads auf, wobei die Befestigungsmittel so ausgestaltet sind, dass das plattenförmige Element in einem befestigten Zustand sich seitlich eines Rades des Fahrrads von oben nach unten erstreckt. "Von oben nach unten" bedeutet, dass sich das plattenförmige Element in seiner Längserstreckung nicht senkrecht zur Rotationsebene des Rades erstreckt. Bei dem Rad, an dem sich seitlich das plattenförmige Element erstreckt, handelt es sich vorzugsweise um das Hinterrad eines Fahrrades. Dies hat den Vorteil, dass die Tasche, welche seitlich außerhalb des plattenförmigen Elements angeordnet wird, nicht an dem lenkbaren Rad des Fahrrades angeordnet wird. Die Fahrstabilität des Fahrrades einschließlich Last ist bei der Anordnung der Tasche am Hinterrad größer.

Ferner weist die erfindungsgemäße Anordnung Haltemittel zum Halten einer Tragetasche auf, wobei die Haltemittel im Bereich des oberen Endes des plattenförmigen Elements oder darüber angeordnet sind. Dabei sind die Haltemittel direkt oder indirekt am Gepäckträger befestigt. Daher ist es möglich, dass die Haltemittel zumindest eine Tasche halten, wobei sich die Tasche seitlich von dem Rad an der Außenseite des plattenförmigen Elements befindet. Das plattenförmige Element verhindert somit wie bereits erwähnt einen mechanischen Kontakt zwischen Tasche und Rad. Die "indirekte" Befestigung der Haltemittel schließt den Fall mit ein, dass die Haltemittel am plattenförmigen Element ausgebildet sind.

Die Haltemittel sind derart relativ zu dem plattenförmigen Element angeordnet, dass eine von den Haltemitteln gehaltene Tasche an der Außenseite des plattenförmigen Elements anliegt. Dabei erstreckt sich eine Außenfläche des plattenförmigen Elements in einer Richtung von oben nach unten und schließt im befestigten Zustand einen spitzen Winkel mit der Vertikalen ein. Ein Teil der Gewichtskraft der Tasche mit den darin befindlichen Gegenständen ("der Last") drückt das plattenförmige Element daher in Richtung des Rades. Insbesondere wenn es sich um ein plattenförmiges Element mit einer annähernd ebenen Außenfläche handelt, die sich im befestigten Zustand gegenüber der Innenseite, die zum Rad weist, des plattenförmigen Elements befindet, treten zwei positive Effekte ein. Zum einen verhindert die Kraftkomponente auf die Außenfläche des plattenförmigen Elements, dass die Tasche relativ zu dem plattenförmigen Element in Bewegung versetzt wird. Zumindest werden Schwingungen der Tasche gedämpft. Zum anderen presst die Tasche das plattenförmige Element gegen eine Strebe zum Abstützen eines Gepäckträgers, so dass sich auch das plattenförmige Element nicht relativ zu dem Fahrrad in Bewegung setzen kann oder zumindest Schwingungen oder solche Bewegungen gebremst werden. Der spitze Winkel beträgt zumindest 5°, z.B. zumindest 10°, und ist in einem konkreten Fall z.B. ca. 15°. Die Obergrenze für den spitzen Winkel liegt vorzugsweise bei 30°. Z. B. beträgt der spitze Winkel höchstens 20° und ist in einer konkreten Ausgestaltung, wie erwähnt, ca. 15°.

In einem solchen Winkelbereich wird einerseits die Gesamtbreite aus Fahrrad und Last nicht unnötig vergrößert und wird andererseits eine erhebliche Kraftkomponente von der Last auf das plattenförmige Element ausgeübt. Durch Profilierungen und/oder Ausnehmungen an der Außenoberfläche des plattenförmigen Elements können die Bewegungsmöglichkeiten für eine Relativbewegung zwischen plattenförmigem Element und Last noch weiter eingeschränkt werden.

Bei den Haltemitteln kann es sich z.B. um einen Haken, Knopf oder einen anderen Vorsprung handeln, der durch ein vorzugsweise formstabiles Material gebildet wird. Es ist aber auch z. B. möglich, dass die Haltemittel die Tasche klammernd halten. Die Haltemittel können an den Befestigungsmitteln zum Befestigen des plattenförmigen Elements befestigt sein und/oder ausgestattet sein, an dem Gepäckträger.und/oder an den Befestigungsmitteln befestigt zu werden. Eine weitere Möglichkeit besteht darin, die Haltemittel an einer Materialverbindung auszubilden oder zu befestigen, die zwei plattenförmige Elemente miteinander verbindet. Diese beiden plattenförmigen Elemente werden an den gegenüberliegenden Seiten des Rades angeordnet, wobei die Verbindung sich über die Ladefläche des oberhalb des Rades angeordneten Gepäckträgers erstreckt. In jedem Fall wird bevorzugt, dass die Haltemittel so ausgestaltet sind, dass die Tasche (bzw. jede Tasche jeweils) an einem einzigen Aufhängepunkt aufgehängt wird. Anders als bei Satteltaschen, die bei Fahrrädern üblicherweise an mehreren Punkten am Fahrrad fixiert werden, kann die Tasche daher wesentlich einfacher am Fahrrad aufgehängt werden. Andererseits kann die Tasche daher aber eine Pendelbewegung ausführen, bzw. vor- und zurück schwingen, während das Fahrrad fährt.

Noch eine weitere, bevorzugte Möglichkeit besteht darin, dass das plattenförmige Element im Bereich seines oberen Endes einen Vorsprung aufweist, der das Haltemittel ist oder der ein Teil der Haltemittel ist. das plattenförmige Element und der Vorsprung sind in diesem Fall einstückig ausgebildet. Bei dem Vorsprung kann es sich z. B. um einen hakenförmigen Vorsprung und/oder einen nach oben abragenden Vorsprung handeln. Es kann auch eine Mehrzahl Vorsprünge an dem plattenförmigen Element ausgebildet sein.

Bei den Befestigungsmitteln zum Befestigen des plattenförmigen Elements kann es sich um eine einstückige Konstruktion handeln oder um eine Kombination von Teilen, die nicht miteinander verbunden sind und erst im befestigten Zustand über das plattenförmige Element miteinander verbunden sind. Z. B. kann ein Teil der Befestigungsmittel dazu dienen, das plattenförmige Element an einem oberhalb des Rades angeordneten Gepäckträger (z. B. des Gepäckträgers am Hinterrad des Fahrrades) zu befestigen. Z. B. kann das plattenförmige Element im Bereich seines oberen Endes eine Greifeinrichtung zum Greifen eines Fahrrad-Rahmenteils aufweist, wobei die Greifeinrichtung das Befestigungsmittel ist oder Teil der Befestigungsmittel ist. in diesem Fall sind das plattenförmige Element und die Greifeinrichtung einstückig ausgebildet. Optional kann außerdem noch der oben bereits erwähnte Vorsprung einstückig an dem plattenförmigen Element ausgebildet sein. Bei der Greifeinrichtung kann es sich z. B. um eine Einrichtung mit zwei gegeneinander beweglichen Elementen handeln, die im montierten Zustand einen Teil des Gepäckträgers vollständig oder fast vollständig umgreifen. Insbesondere durch Betätigung des unteren beweglichen Elements kann die Montage ermöglicht werden oder das Umgreifen des Teils des Gepäckträgers gelöst werden.

Ein zweiter Teil der Befestigungsmittel kann dann dazu dienen, das plattenförmige Element in einem tiefer gelegenen Bereich Teilen des Gepäckträgers seitlich des Rades zu befestigen oder zumindest die Bewegungsfreiheit des plattenförmigen Elements relativ zu dem Gepäckträger in diesem Bereich einzuschränken. Zur Aufhängung des plattenförmigen Elements können insbesondere Seile, Bänder, Materialstreifen oder Formteile (insbesondere Kunststoffformteile) dienen. Beispielsweise kann oben an dem plattenförmigen Element ein Kunststoffteil kraftschlüssig und/oder formschlüssig mit dem plattenförmigen Element verbunden sein. Dieses Kunststoffformteil kann an einem freien Ende als Clip ausgestaltet sein, der unter elastischer Verformung an der Längsstrebe eines Gepäckträgers angeklemmt werden kann.

Das Befestigungsmittel oder die Befestigungsmittel kann /können am plattenförmigen Element ausgebildet sein, z. B. als Klammer oder Klettverschlussstreifen. Dies dient insbesondere dazu, das plattenförmige Element an der Seite eines Gepäckträgers oberhalb des Rades zu befestigen.

Zur Befestigung eines tiefer gelegenen Bereiches des plattenförmigen Elements seitlich des Rades wird ein lang gestrecktes elastisches Element bevorzugt, welches z. B. in der Art von einem Expander an den entgegen gesetzten Enden jeweils einen Haken aufweist, so dass die Haken unter Spannung des lang gestreckten Elements an Teilen des Gepäckträgers des Fahrrads eingehakt werden können. Dabei erstreckt sich z. B. zumindest ein Abschnitt des lang gestreckten elastischen Elements durch eine Öffnung des plattenförmigen Elements hindurch oder ist fest mit einem Bereich des plattenförmigen Elements verbunden.

Wie bereits anhand eines Ausführungsbeispiels erwähnt, kann die Anordnung zwei plattenförmige Elemente aufweisen, die in dem befestigten Zustand an einander gegenüberliegenden Seiten des Rades angeordnet sind. Dies ermöglicht es, an den gegenüberliegenden Seiten jeweils außenseitig der plattenförmigen Elemente eine Last anzuordnen. Dabei sind vorzugsweise für jede Seite des Rades Haltemittel zum Halten jeweils zumindest einer Tasche vorgesehen. Z.B. ist ein erstes Haltemittel an der einen Seite des Rades und oberhalb des Rades angeordnet und ist ein zweites Haltemittel an der anderen Seite des Rades und oberhalb des Rades angeordnet. Dies bietet die Möglichkeit, abhängig von der konkreten Ausgestaltung des Haltemittels, die an einer Seite des Rades anzuordnende Tasche nicht nur an dem Haltemittel auf derselben Seite aufzuhängen, sondern alternativ oder zusätzlich an dem Haltemittel auf der anderen Seite des Rades aufzuhängen. Schlaufen, Ausnehmungen oder Henkel der Tasche, an dem bzw. der die Tasche aufgehängt werden kann, können daher z.B. auf der gegenüberliegenden Seite des Rades eingehängt werden, so dass sich ein Teil der Tasche oder der Aufhängung über die Mittelebene des Rades hinweg zu der anderen Seite erstreckt, auf der die eigentliche Last angeordnet wird. Abhängig von der Art der Tasche und deren Aufhängung (z.B. lange Henkel oder Schlaufe) kann daher gewählt werden, an welchem Haltemittel die Tasche aufgehängt wird. Dadurch kann eingestellt werden, wie hoch die tiefstgelegene Stelle der Last über dem Boden angeordnet wird. Insbesondere kann so verhindert werden, dass sich die Last zu dicht am Boden befindet und eventuell mit dem Boden in schleifenden Kontakt gelangt. Es kann aber auch verhindert werden, dass sich die Last zu weit nach unten über die Unterkante des plattenförmigen Elements hinaus erstreckt. In einem solchen Fall würde trotz des Vorhandenseins des plattenförmigen Elements möglicherweise ein mechanischer Kontakt zu dem Rad auftreten können.

Auch die Haltemittel können Teil einer Verbindungseinrichtung sein, die zwei plattenförmige Elemente, welche an den entgegen gesetzten Seiten des Rades angeordnet werden miteinander verbindet. Dies gilt auch für den Fall, dass die Befestigungsmittel nicht Teil der Verbindungseinrichtung sind oder mit dieser verbunden sind.

In einer konkreten Ausgestaltung ist das plattenförmige Element über zumindest einen Teil der Befestigungsmittel mit den Haltemitteln verbunden. So ist das plattenförmige Element an einem oberhalb des Rades angeordneten Gepäckträger aufgehängt und sind die Haltemittel ebenfalls an dem Gepäckträger angeordnet. Es ist aber auch möglich, dass an den Haltemitteln zumindest ein Teil der Befestigungsmittel ausgeformt ist. Z.B. kann an dem oberen Ende einer Aufhängung zum Aufhängen des plattenförmigen Elements ein Haken oder Vorsprung ausgebildet sein, an dem zumindest eine Tasche aufgehängt werden kann.

Insbesondere um den oben bereits beschriebenen spitzen Winkel zwischen dem Verlauf der Außenfläche des plattenförmigen Elements und der Vertikalen zu erzielen, ist das plattenförmige Element mit einem an dem Element ausgeformten und/oder daran befestigten Abstandshalter kombiniert. In dem befestigten Zustand befindet sich der Abstandshalter an der zum Rad weisenden Innenseite des plattenförmigen Elements. Auf diese Weise kann erreicht werden, dass eine Außenfläche des plattenförmigen Elements an der der Innenseite gegenüberliegenden Seite des plattenförmigen Elements in der oberen Hälfte der vertikalen Längserstreckung des plattenförmigen Elements einen kleineren Abstand von Teilen des Gepäckträgers des Fahrzeugs hat als in der unteren Hälfte. Wenn sich diese Teile des Gepäckträgers etwa in einer vertikalen Ebene befinden, führt dies zu dem bereits beschriebenen spitzen Winkel. Insbesondere wenn das Fahrrad eine Gangschaltung mit seitlich von dem Rad befestigten Zahnkränzen aufweist, kann der Abstandshalter einen Kontakt zwischen dem plattenförmigen Element und den Zahnkränzen oder anderen Teilen einer Gangschaltung verhindern. Der Abstandshalter ist daher vorzugsweise so bemessen, dass er das plattenförmige Element auf Höhe der Gangschaltung in einem Abstand zum Rad und zum Rahmen hält, der einen Kontakt des plattenförmigen Elements zu der Gangschaltung verhindert.

Der Abstandshalter muss nicht fest mit dem plattenförmigen Element verbunden sind. Vielmehr ist es auch möglich, den Abstandshalter separat an Teilen des Gepäckträgers des Fahrrades zu befestigen. Bevorzugt wird jedoch, dass der Abstandshalter an dem plattenförmigen Element ausgeformt oder daran befestigt ist. Z.B. ist das aus einem formstabilen Material gefertigte plattenförmige Element derart profiliert oder stellenweise verdickt, dass der Abstandshalter aus dem ansonsten im Wesentlichen ebenen Verlauf des plattenförmigen Elements Richtung Rad vorspringt. Es ist jedoch auch möglich, dass das plattenförmige Element lediglich eine von oben nach unten zunehmende Dicke aufweist. Z. B. können sich die Außenflächen des plattenförmigen Elements sowohl an der Innenseite als auch an der Außenseite entlang einer Ebene erstrecken, das Oberflächenmaterial aber von oben nach unten einen zunehmenden Abstand aufweisen, wobei der Hohlraum zwischen dem Oberflächenmaterial Abstützungen zum Abstützen der beiden Außenflächen gegeneinander aufweisen kann. Eine solche Konstruktion kann z.B. als Stegplatte mit von oben nach unten zunehmender Länge der Stege ausgeführt sein, wobei die Länge der Stege in Richtung der Dicke der Stegplatte gemessen wird. Die "Stege" verbinden die Materialien an den gegenüberliegenden Oberflächen der Platte.

Um die Größe des oben erwähnten spitzen Winkels einstellen zu können, kann der Abstandshalter einstellbar sein und/oder kann die aus dem plattenförmigen Element und dem Abstandshalter bestehende Anordnung einstellbar sein. Zum Beispiel kann die Dicke des Abstandshalters, d. h. die Dimension zwischen dem plattenförmigen Element und dem Rahmen des Fahrrades einstellbar sein. So ist es beispielsweise möglich, den Abstandshalter an einem Bereich des plattenförmigen Elements fest anzubringen, eine weitere Kontaktstelle zwischen Abstandshalter und plattenförmigem Element jedoch einzustellen und dadurch die Dicke zu variieren. Alternativ oder zusätzlich kann die vertikale Position des Abstandshalters relativ zu dem Fahrrad einstellbar sein, sodass davon abhängig der spitze Winkel eingestellt wird. Befindet sich der Abstandshalter in einer höheren Position am Rahmen, ist der spitze Winkel größer und umgekehrt, wenn das plattenförmige Element außerdem oben am Rahmen befestigt ist.

Es ist auch möglich, dass der Abstandshalter für das plattenförmige Element aus separaten Stücken gebildet wird.

Ein Abstandshalter kann jedoch auch an anderen Arten von plattenförmigen Elementen vorgesehen sein. Z. B. kann ein aus Stäben oder anderen lang gestreckten Elementen konstruiertes plattenförmiges Element einen von oben nach unten verlaufenden langen Stab und einen im unteren Drittel des langen Stabs angesetzten kurzen Querstab aufweisen. Wenn der Querstab am unteren Ende des langen Stabs angeordnet ist, ist ein T-Profil erzielt. Der Querstab dient als Abstandshalter und kann an seinem freien Ende z.B. über einen Teil der Befestigungsmittel mit den seitlich des Rades angeordneten Teil des Gepäckträgers verbunden sein. Vorzugsweise befindet sich der Abstandshalter in dem befestigten Zustand in der unteren Hälfte der vertikalen Längserstreckung des plattenförmigen Elements. Insbesondere kann sich der Abstandshalter im unteren Drittel der vertikalen Längserstreckung befinden. Es kann auch mehr als eine solche Stabkonstruktion an derselben Seite des Rades angeordnet werden.

Wenn das plattenförmige Element so ausgestaltet und an dem Gepäckträger des Fahrrads befestigt ist, dass der Abstandshalter sich oberhalb der Drehachse des Rades befindet, wird er bei üblicher Gestaltung des Fahrradrahmens mit zwei V-förmig von oben auf die Achse des Rades zulaufenden Streben an diesen beiden Streben anliegen, so dass ein stabiler Sitz erreicht wird. Typischerweise ist die in Fahrtrichtung vorne liegende Strebe eine Strebe eines Tragrahmens eines Fahrrades und ist die andere, von der Achse sich nach hinten oben erstreckende Strebe eine Stützstrebe eines Fahrrad-Gepäckträgers oberhalb des Hinterrades.

Um die Höhenposition des Abstandshalters relativ zum Rad anpassen zu können, werden vorzugsweise ein oder beide folgenden Merkmale vorgeschlagen:
- die Befestigung des plattenförmigen Elements im Bereich von dessen oberem Ende ist längenverstellbar und/oder elastisch, sodass dadurch die Position des an dem plattenförmigen Element befestigten Abstandshalters eingestellt werden kann. Bei elastischer Ausführung kann die Position dadurch eingestellt werden, dass weitere Befestigungsmittel das plattenförmige Element in dessen mittleren oder tieferen Bereich an Teilen des Gepäckträgers des Fahrrades befestigen und die elastische Befestigung dementsprechend mehr oder weniger gespannt wird. Die elastische Befestigung kann jedoch immer noch einen Teil des Gewichts des plattenförmigen Elements tragen. Insbesondere fixiert sie das plattenförmige Element in dessen oberem Bereich. Der Abstandshalter ist an dem plattenförmigen Element angebracht. Seine Position relativ zu dem plattenförmigen Element ist jedoch einstellbar. Z. B. kann der Abstandshalter Vorsprünge aufweisen, die wahlweise in höher oder in tiefer gelegene Ausnehmungen des plattenförmigen Elements eingesetzt werden können, um den Abstandshalter an dem plattenförmigen Element zu befestigen.

In einer besonderen Ausgestaltung der Haltemittel weisen diese einen elastischen Ring auf, an dem an gegenüberliegenden Seiten zumindest jeweils ein klammerartiger Vorsprung angeordnet ist. Der Abstand der auf diese Weise gegenüberliegenden klammerartigen Vorsprünge ist so bemessen, dass er kleiner ist als der Abstand von zwei quer zur Längsrichtung des Fahrrades voneinander beabstandeten, außen liegenden Längsstreben an der Lastfläche des Gepäckträgers, die sich in der Längsrichtung erstrecken, wobei der elastische Ring so verformbar ist, dass sich der Abstand der gegenüberliegenden Vorsprünge vergrößert. Auf diese Weise kann der elastische Ring verformt werden, so dass sich der Abstand der Vorsprünge vergrößert, und auf die Lastfläche eines Gepäckträgers aufgesetzt werden, wobei sich der elastische Ring an den Teilen des Gepäckträgers festklammert, wenn er sich entspannt.

An den seitlichen Enden dieser Halteeinrichtung kann sich jeweils zumindest ein Vorsprung befinden, an dem Taschen aufgehängt werden können.

Vorzugsweise weist das plattenförmige Element in der vertikalen Richtung eine Länge von zumindest 30,5 cm, auf. 30,5 cm entsprechen der Hälfte des Durchmessers eines 24"- Rades. Insbesondere ist das plattenförmige Element im befestigten Zustand etwa 45 cm lang und/oder an seiner breitesten Stelle (d.h. in Fahrtrichtung des Fahrrades) etwa 45 cm breit. Die Masse hängen von der Form des plattenförmigen Elements ab. Die Dicke (quer zur Rotationsebene des Rades) beträgt z.B. an dem Abstandshalter etwa 5 cm, und liegt z. B. im Bereich von ca. 4 bis ca. 6 cm.

Ein plattenförmiges Element kann aus verschiedenen Materialien hergestellt werden, z.B. aus Holz, Kunststoff, Verbundwerkstoff (z.B. faserverstärkter Kunststoff). Vorzugsweise ist das plattenförmige Element aus einem Material hergestellt, das eine geringere Dichte als Metall (insbesondere eine Dichte, die kleiner ist als die Hälfte der Dichte von handelsüblichem Stahl oder Aluminium für den Bau von Fahrrädern) aufweist. Ebenfalls bevorzugt wird, dass das plattenförmige Element aus wasserresistentem Material gefertigt ist. z. B. kann das plattenförmige Element aus Papiermaterial oder Karton bestehen und kann die Oberfläche imprägniert und/oder lackiert sein. Alle bezüglich des Materials des plattenförmigen Elements gemachten Angaben gelten vorzugsweise auch für die anderen Teile der erfindungsgemäßen Anordnung, wobei für die verschiedenen Teile der Anordnung unterschiedliche Materialien verwendet werden können. Z.B. ist das plattenförmige Element aus einem Kunststoff sehr geringer Dichte gefertigt, während die Befestigungsmittel aus hochfestem Kunststoff und/oder Metall gefertigt sind, soweit es sich nicht um elastische Befestigungsteile handelt. Die Verwendung von Kunststoffteilen oder anderem Material geringer Dichte, das kostengünstig hergestellt werden kann, ermöglicht es, die Teile der Anordnung zu einem geringen Preis in Ladengeschäften anzubieten. Daher kann ein Kunde, der unerwartet viele Waren kauft, die Teile der Anordnung ohne hohe Kosten erwerben und seinen Einkauf auf einem Fahrrad nach Hause transportieren. Die erfindungsgemäße Anordnung kann einmalig oder wiederholt benutzt werden. Z. B. lässt der Nutzer des Fahrrades die Anordnung solange montiert, bis er das Erscheinungsbild seines Fahrrades wieder verändern möchte und entsorgt die Teile dann. Z. B. sind zumindest Teile der Anordnung aus biologisch abbaubarem Material hergestellt.

Wenn ein plattenförmiges Element verwendet wird, kann die Außenfläche für ein gefälliges oder künstlerisches optisches Design genutzt werden. Alternativ oder zusätzlich kann die Außenoberfläche für Werbung benutzt werden. Der Abstandshalter kann als in Fahrtrichtung des Fahrrades verlaufender Materialbereich ausgestaltet sein, der sich vorzugsweise über nahezu die gesamte Breite (in Fahrtrichtung) des plattenförmigen Elements erstreckt.

Die erfindungsgemäße Anordnung ermöglicht es, z.B. ein bis vier gefüllte Taschen mit Einkaufswaren per Fahrrad zu transportieren, wobei der Gesamtschwerpunkt aus Fahrrad und Last nicht wesentlich über den Drehachsen der Räder liegt. Die Fahrstabilität wird daher nicht negativ beeinflusst. Insbesondere wenn verschiedene Taschen an den gegenüberliegenden Seiten desselben Rades über jeweils ein plattenförmiges Element getrennt an dem Rahmen anliegen, kann die Last gleichmäßig auf beide Seiten verteilt werden.

Bei Verwendung von plattenförmigen Elementen sollte darauf geachtet werden, dass ein ausreichender Abstand zu den Fahrradpedalen eingehalten wird, um den Fahrer beim Treten auf die Pedalen nicht zu behindern. Dies ist bei handelsüblichen Fahrradkonstruktionen leicht möglich, wenn das plattenförmige Element nicht sehr viel breiter als 40 cm ist und die Mitte des plattenförmigen Elements in Fahrtrichtung etwa bei der Drehachse des Rades angeordnet ist.

Nicht nur der niedrige Schwerpunkt trägt zu einem stabilen Fahrverhalten trotz Last bei, sondern auch die Tatsache, dass zwar der größte Teil des Gewichts der Last von den Haltemitteln getragen wird, an denen die Tasche aufgehängt ist, jedoch bei geeigneter Ausgestaltung des plattenförmigen Elements auch ein Teil der Gewichtskraft die Last gegen das plattenförmige Element drückt. Ein Schwingen der Last quer zur Fahrtrichtung wird somit vermieden. Wenn die Halteeinrichtung, wie bevorzugt, so am Fahrradrahmen angeordnet wird, dass die Lastfläche des Gepäckträgers oberhalb des Rades frei bleibt, kann der Gepäckträger zusätzlich für Lasten genutzt werden. Z.B. kann eine weitere Last auf dem Gepäckträger fest gespannt werden.

Bevorzugte Ausführungsbeispiele und weitere Merkmale der Erfindung werden nun unter Bezugnahme auf die beigefügte Zeichnung beschrieben. Die einzelnen Figuren der Zeichnung zeigen schematisch:
Fig. 1 eine Halte- und Befestigungseinrichtung in Seitenansicht, die auf einem Standard-Fahrradgepäckträger montiert werden kann,
Fig. 2 die Einrichtung gemäß Fig. 1 in einem montierten Zustand,
Fig. 3 eine zweite Ausführungsform einer Halte- und Befestigungseinrichtung in Draufsicht von oben in entspanntem Zustand,
Fig. 4 die Einrichtung gemäß Fig. 3 in Draufsicht in einem gespannten Zustand,
Fig. 5 die Einrichtung gemäß Fig. 3 und Fig. 4 in perspektivischer Darstellung von schräg oben in einem montierten Zustand,
Fig. 6 ein plattenförmiges Element in einer Ansicht auf die Außenseite der Einrichtung,
Fig. 7 eine Ansicht von Innen auf das in Fig. 6 dargestellte plattenförmige Element,
Fig. 8 eine weitere Ausführungsform eine plattenförmigen Elements in Außenansicht,
Fig. 9 eine weitere Ausführungsform eines plattenförmigen Elements in Außenansicht,
Fig. 10 noch eine weitere Ausführungsform eines plattenförmigen Elements in Außenansicht,
Fig. 11 eine dreidimensionale Ansicht einer Anordnung mit zwei plattenförmigen Elementen,
Fig. 12 eine Ansicht eines Fahrrades von hinten, wobei von dem Fahrrad das Hinterrad, Rahmenteile im Bereich des Hinterrades und ein Gepäckträger dargestellt sind und wobei außerdem eine Ausführungsform einer erfindungsgemäßen Anordnung erkennbar ist,
Fig. 13 ein weiteres plattenförmiges Element in Seitenansicht,
Fig. 14 das plattenförmige Element gemäß Fig. 13 im Profil und
Fig. 15 die Außenansicht einer anderen Ausgestaltung eines plattenförmigen Elements, das z. B. statt der in Fig. 12 dargestellten plattenförmigen Schutzeinrichtung verwendet werden kann,
Fig. 16 die Innenansicht (Ansicht der im montierten Zustand zum Rad weisenden Seite) des plattenförmigen Elements gemäß Fig. 15 in einem ersten Zustand,
Fig. 17 die Innenansicht des plattenförmigen Elements gemäß Fig. 15 und 16 in einem zweiten Zustand,
Fig. 18 das Profil des plattenförmigen Elements gemäß Fig. 15 bis 17,
Fig. 19 schematisch eine Draufsicht von der Innenseite auf eine weitere Ausführungsform eines plattenförmigen Elements mit einem dreiteiligen Abstandshalter, dessen Dicke, d. h. Abstand zwischen plattenförmigem Elements und Gepäckträger des Fahrrades, einstellbar ist,
Fig. 20 eine Seitenansicht auf den Abstandshalter und das plattenförmige Element von Fig. 19,
Fig. 21 schematisch eine Seitenansicht auf noch eine weitere Ausgestaltung eines Abstandshalters, der separat von dem zugehörigen plattenförmigen Element an Rahmenteilen des Fahrrades befestigt ist, und
Fig. 22 den Abstandshalter von Fig. 21 , wobei das zugehörige plattenförmige Element an dem Gepäckträger des Fahrrads montiert ist und an dem Abstandshalter befestigt ist.

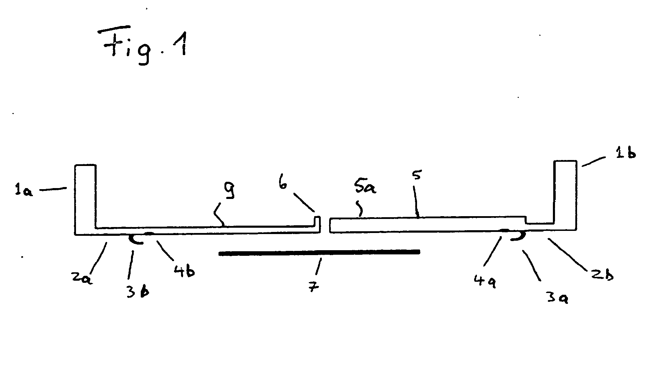

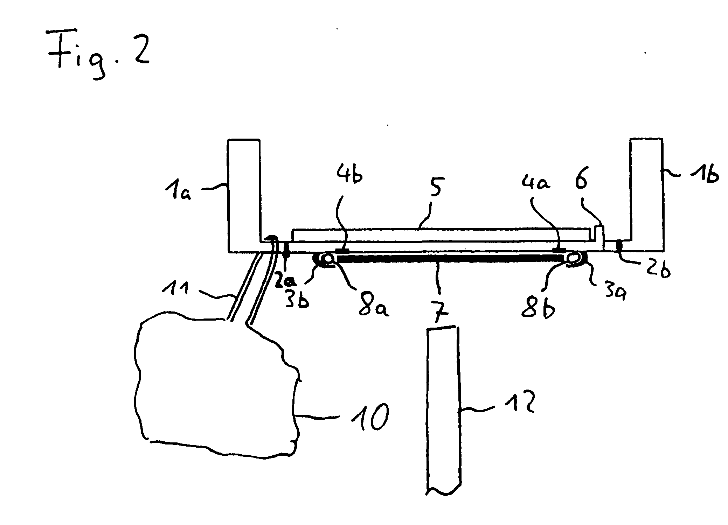

Die in Fig. 1 dargestellte Einrichtung ist dreiteilig und kann oben auf der Lastfläche eines Standard-Fahrradgepäckträgers montiert werden. Fig. 2 zeigt den montierten Zustand. Man erkennt den Querschnitt von einem ersten Stab 8a des Gepäckträgers und von einem zweiten Stab 8b des Gepäckträgers, wobei sich die Stäbe 8 senkrecht zur Bildebene von Fig. 2 erstrecken.
Wie nicht näher dargestellt ist, kann der in Fig. 1 rechts dargestellte Teil 5 der Einrichtung in seinem Inneren, zum gegenüberliegenden Teil 9 zugewandten Bereich 5a hohl ausgeführt sein, so dass das freie Ende 6 des Teils 9 durch den hohlen Bereich 5a hindurch gesteckt werden kann und so dass das abgewinkelte Ende 6 am gegenüberliegenden Ende des hohlen Bereichs 5a heraustreten kann, wie es in Fig. 2 gezeigt ist.

Als dritten Teil weist die Einrichtung ein elastisches Band 7 auf, welches an einem Ende an einer Stelle 4a des ersten Teils 5 und an seinem anderen, gegenüberliegenden Ende an einem Bereich 4b des zweiten Teils 9 befestigt werden kann. Z.B. ist in den Bereich 4a, 4b jeweils ein Loch vorgesehen und werden die Enden des elastischen Bandes 7 dort jeweils mit nicht mehr dargestellten weiteren Befestigungsmitteln befestigt, so dass das elastische Band 7 auf Zug beansprucht wird, wenn sich die Bereiche 4a, 4b voneinander entfernen. Fig. 2 zeigt einen Zustand des elastischen Bandes 7, in dem dieses nur wenig gespannt ist. Sind die Bereiche 4a, 4b jedoch weiter auseinander gelegen als in Fig. 2 dargestellt, ist die Zugkraft in Längsrichtung des elastischen Bandes 7 größer. Die Einrichtung wird daher in dem in Fig. 2 dargestellten Zustand gehalten, d.h. die jeweils unten an der Unterseite der Teile 5, 9 ausgebildeten Klammern 3a, 3b umfassen die Stangen 8a, 8b von außen und werden durch die elastischen Rückstellkräfte des elastischen Bandes 7 gegen die Stäbe 8a, 8b gepresst.

Im Ergebnis ist die Einrichtung aufgrund des elastischen Bandes 7 gegen ein unbeabsichtigtes Lösen von dem Gepäckträger gesichert.

Außerdem weisen die Teile 5, 9 jeweils an ihren außen gelegenen Enden einen nach oben aufragenden Vorsprung 1 b, 1a auf. Wie Fig. 2 zeigt, befinden sich diese Vorsprünge 1 a, 1 b seitlich außerhalb der Stangen 8a, 8b des Gepäckträgers. Indem die Henkel oder Schlaufen einer Tasche an einem der Vorsprünge 1a, 1 b aufgehängt werden, so dass die Vorsprünge durch die von der Schlaufe oder dem Henkel gebildeten Öffnung hindurch treten, kann die Tasche entweder an derselben Seite des Vorsprungs 1a, 1 b oder, über Kreuz aufgehängt, an der gegenüberliegenden Seite der Einrichtung herabhängen. In Fig. 2 ist schematisch eine Tasche 10 mit einer Tragschlaufe 11 dargestellt, die an der linken Seite an dem Vorsprung 1a aufgehängt ist.

Ferner kann die Einrichtung z.B. an der mit 2a oder 2b bezeichneten Stelle eine Öffnung aufweisen, an der ein nicht näher in Fig. 2 dargestelltes plattenförmiges Element aufgehängt wird. Das plattenförmige Element befindet sich dann zwischen der Tasche 10 und dem in der Mitte unten in Fig. 2 schematisch dargestellten Rad 12 des Fahrrades. Weitere Teile des Gepäckträgers des Fahrrades sind der Übersichtlichkeit wegen in Fig. 2 weggelassen.

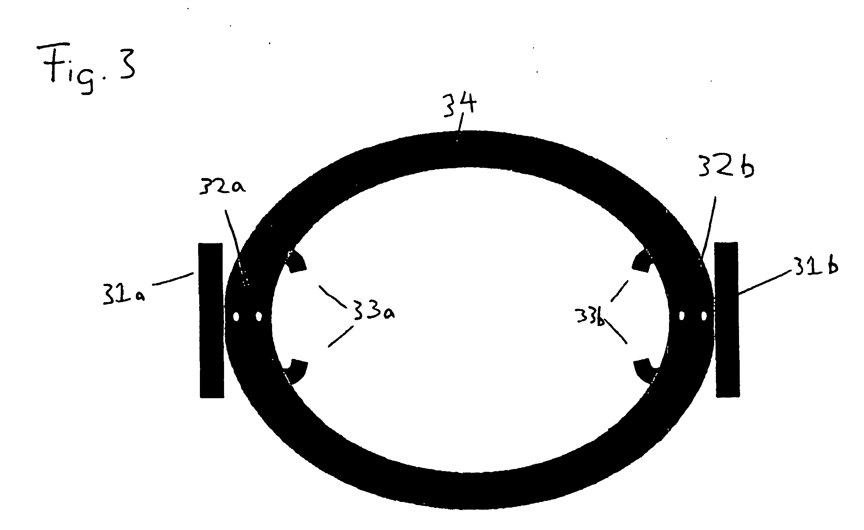

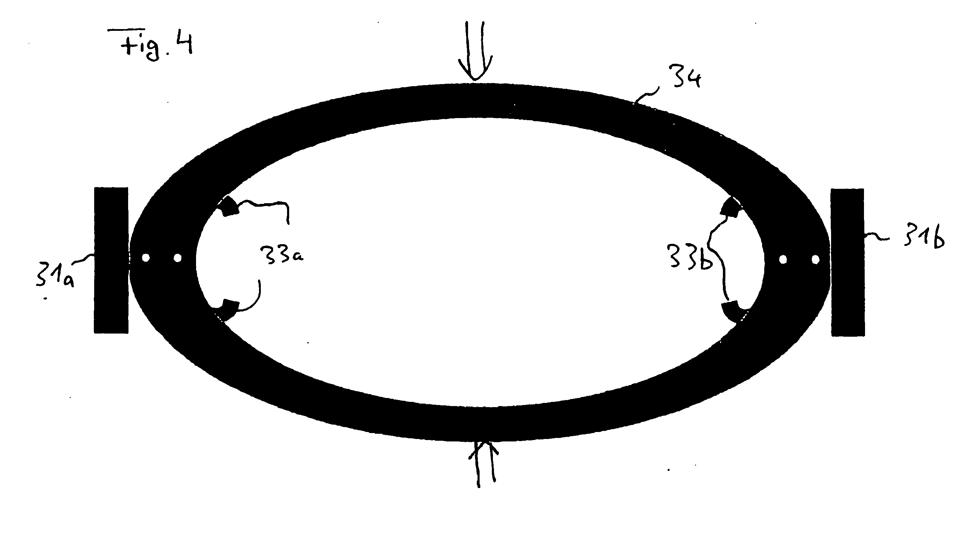

Fig. 3 bis Fig. 5 zeigen einen elastischen Ring 34, der in der Fig. 3 dargestellten ovalen Form in seinem annähernd entspannten Zustand ist. Wenn der Ring 34, wie in Fig. 4 durch Pfeile angedeutet zusammengedrückt wird, so dass das Oval länglicher wird, setzt der Ring 34 dem elastische Rückstellkräfte entgegen. In dem in Fig. 4 dargestellten Zustand sind die rechts und links im Bild dargestellten Enden des Ovals, an denen sich ähnlich wie bei der Einrichtung in Fig. 1 und 2 Haken 33a, 33b und nach oben aus der Bildebene in Fig. 4 herausragende Vorsprünge 31 a, 31 b befinden, in größerem Abstand als in dem entspannten Zustand in Fig. 3.

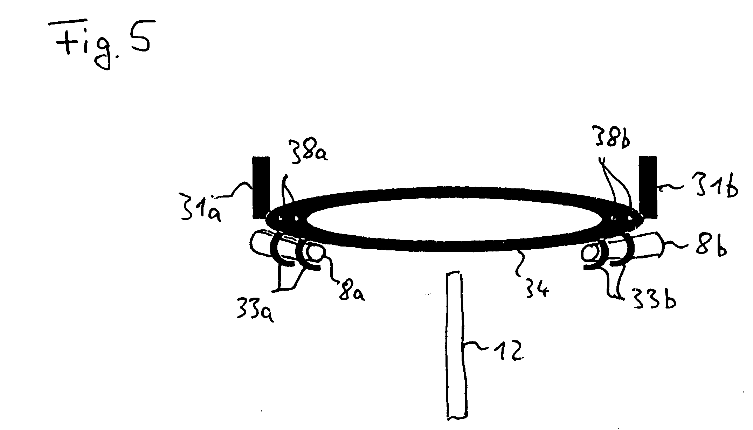

Die Einrichtung wird daher durch Ausüben von Kräften wie in Fig. 4 angedeutet verformt, dann z.B. auf die Lastfläche eines Standard-Fahrradgepäckträgers aufgesetzt, dann wird es dem Ring 34 erlaubt sich zu entspannen, so dass die Klammern 33a, 33b zu parallel zueinander verlaufenden Streben 8a, 8b des Gepäckträgers oder zu anderen Rahmenteilen in Kontakt gelangen. Die Darstellung in Fig. 5 ist schematisch perspektivisch, in Fahrtrichtung gesehen zu verstehen. Die dargestellten Abschnitte der Streben 8a, 8b verlaufen in Wirklichkeit etwa parallel zueinander.

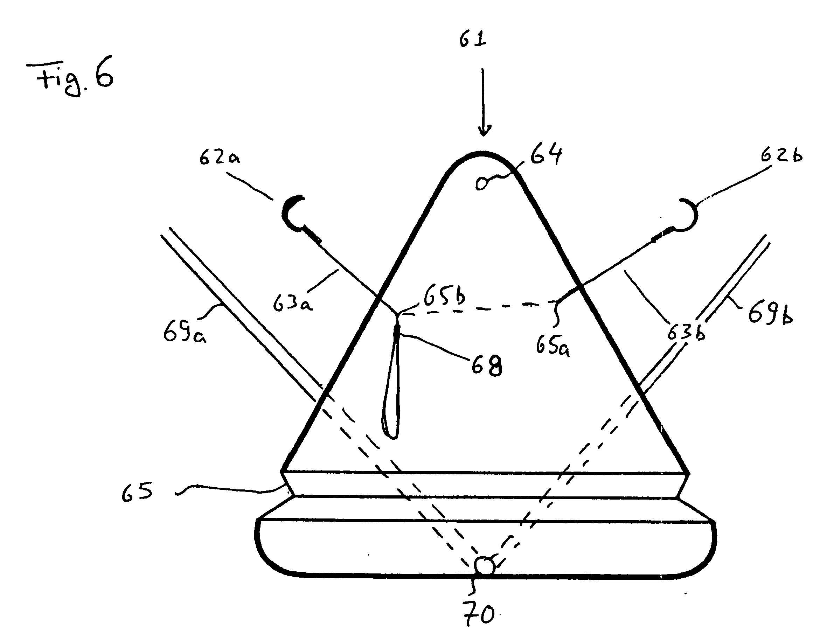

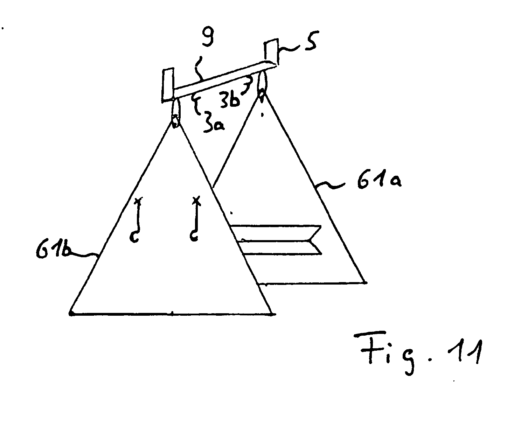

Wiederum können an den Vorsprüngen 31a, 31 b Taschen aufgehängt werden. Ferner sind wiederum Bereiche 38a, 38b nahe der Vorsprünge 31 a, 31 b vorhanden, an denen plattenförmige Elemente aufgehängt werden können, welche sich im montierten Zustand auf beiden Seiten seitlich des in der Mitte von Fig. 5 angedeuteten Rades 12 befinden. Fig. 11 zeigt zwei plattenförmige Elemente 61 a, 61 b, die eine Einrichtung wie in Fig. 1 und 2 dargestellt sind aufgehängt sind. Zwischen den Einrichtungen 61 können sich das Hinterrad eines Fahrrades und die dort angeordneten Rahmenteile des Fahrrades befinden. Die plattenförmigen Elemente 61 können wie genauer in Fig. 6 dargestellt ausgeführt sein. In Fig. 11 sind Teile mit denselben Bezugszeichen bezeichnet, wie in bereits beschriebenen Figuren.

Fig. 6 zeigt die Außenoberfläche, d.h. in montiertem Zustand vom Rad abgewandte Seite eines plattenförmigen Elementes 61. Ferner sind in Fig. 6 zwei Streben 69a, 69b der Rahmenkonstruktion des Fahrrades dargestellt, die V-förmig von unten nach oben auseinander laufen und unten beide im Bereich der Nabe 70 des Hinterrades befestigt sind. Die gestrichelten Abschnitte befinden sich hinter dem plattenförmigen Element 61. Z.B. stellt Fig. 6 die Ansicht von der rechten Seite des Fahrrades dar, so dass die Strebe 69b z.B. eine Strebe des Tragrahmens des Fahrrades ist und die Strebe 69a z. B. der Abstützung des in Fig. 6 nicht näher dargestellten Gepäckträgers dient.

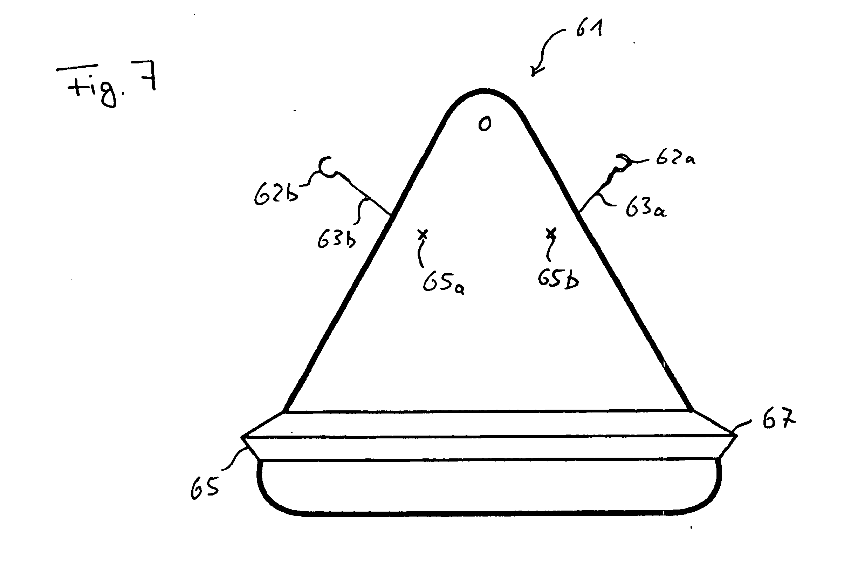

Die parallelen Oberflächen des plattenförmigen Elements erstrecken sich an der Innenseite und Außenseite etwa parallel zueinander und in einer Ebene. Dabei ist die Platte dreieckig mit abgerundeten Ecken. In der unteren Hälfte der Einrichtung 61 weist diese jedoch eine im Querschnitt V-förmige Profilierung 65 auf, wobei die Spitze 67 der Profilierung an der in Fig. 7 dargestellten Innenseite liegt, d.h. im montierten Zustand an den Streben 69a, 69b anliegt. Der restliche Bereich der Innenseite liegt dagegen nicht oder allenfalls punktuell an der Konstruktion des Gepäckträgers des Fahrrades an.

Die Profilierung 65 erstreckt sich über die gesamte Breite der Einrichtung 61, etwa parallel zur Fahrtrichtung des Fahrrades.

Um die Einrichtung 61 oben, im Bereich ihrer oberen abgerundeten Ecke aufhängen zu können, weist der Bereich dort eine Durchgangsöffnung 64 auf. Ferner sind an den Stellen 65a, 65b Durchgangsöffnungen durch das plattenförmige Material oder Befestigungsbereiche gebildet, an denen jeweils ein elastisches Band 63a, 63b mit einem an dessen freien Ende angeordneten Haken 62a, 62b befestigt.

Alternativ kann es sich auch um ein einziges, durchgehendes elastisches Band handeln, das an den Durchgangsöffnungen 65a, 65b durch das Plattenmaterial hindurchführt und auf der Innenseite der Platte, wie es in Fig. 6 durch eine gestrichelte Linie dargestellt ist, entlang geführt ist. Mittels einer Schlaufe 68, welche eine Fixiereinrichtung aufweist, kann die verfügbare Länge des elastischen Elements 63a bzw. des gesamten elastischen Elements verlängert oder verkürzt werden. Auf diese Weise kann die Einrichtung 61 mittels der Haken 62a, 62b an unterschiedlichen Konstruktionen von Gepäckträgern von Fahrrädern befestigt werden. Insbesondere können die elastischen Elemente 63a, 63b kürzer sein als in Fig. 6 dargestellt, sodass sie an den Streben 69a, 69b eingehakt werden können.

Es sind auch andere hinsichtlich der Länge und Befestigungspunkte adaptierbare Befestigungsmittel für plattenförmige Schutzeinrichtungen verwendbar, z.B. Gewebebänder oder formstabile Kunststoffteile zum Anklippen an die Konstruktion des Gepäckträgers.

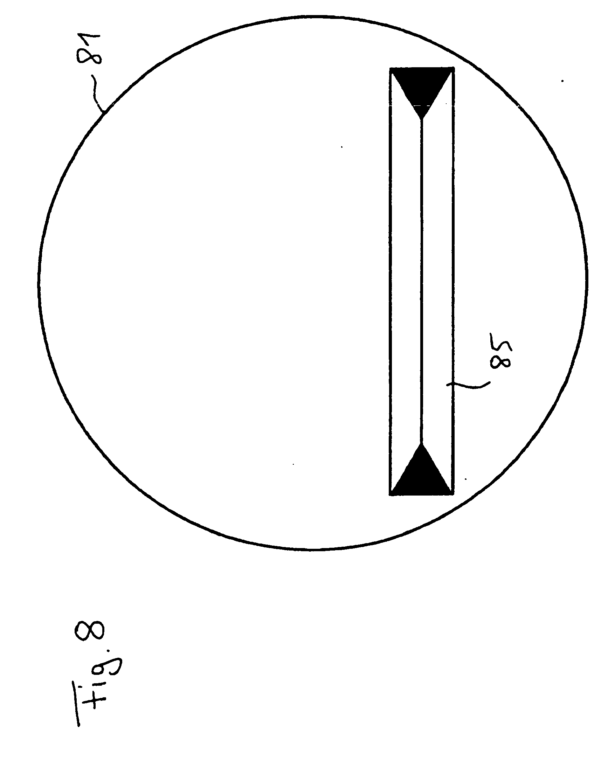

Fig. 8 zeigt eine andere Form eines plattenförmigen Elementes 81, das in ihrem unteren Drittel wiederum einen Abstandshalter aufweist, der mit dem Bezugszeichen 85 bezeichnet ist. Dabei handelt es sich jedoch nicht um eine Profilierung, sondern um ein zusätzliches Bauteil, das fest mit der Oberfläche der Platte verbunden ist, z.B. mit einem Industrieklebstoff festgeklebt ist, oder wenn beide Materialien aus Kunststoff gefertigt sind, durch ein thermoplastisches Verfahren angeschweißt wurde.

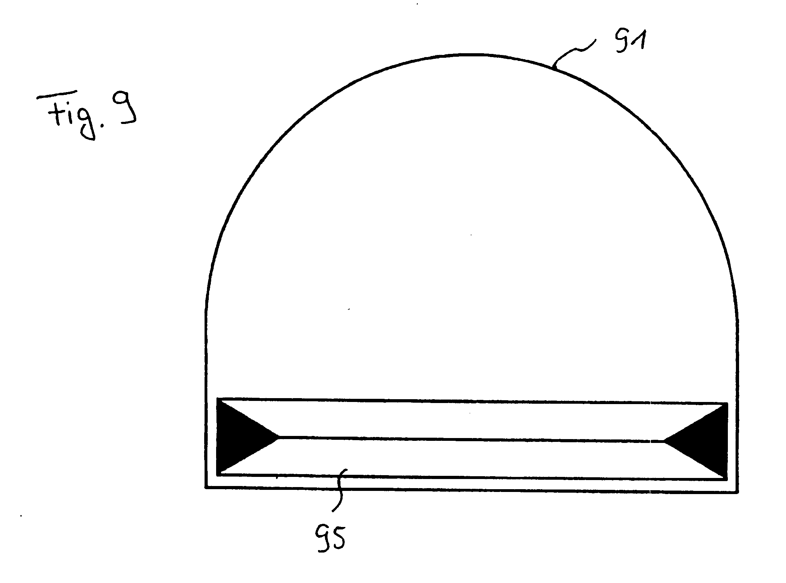

Außer der in Fig. 8 gezeigten kreisförmigen Form des plattenförmigen Elements kommen noch weitere Formen in Frage, z. B. die in Fig. 9 dargestellte halbkreisförmige Form einer Einrichtung 91 mit ebenfalls einem aufgesetzten Abstandshalter 95.

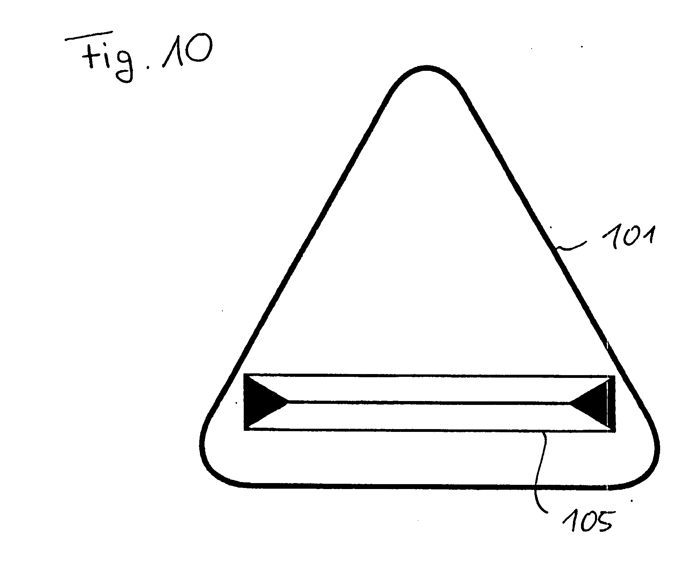

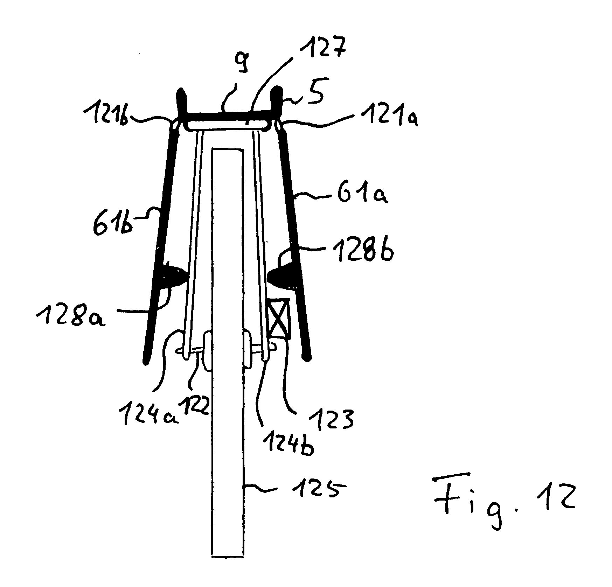

Auch die Dreiecksform mit einer oben liegenden Ecke der Einrichtung gemäß Fig. 6 und 7 kann wie in Fig. 10 gezeigt einen im unteren Viertel aufgesetzten Abstandshalter 105 aufweisen. Auch bei der in Fig. 10 dargestellten Einrichtung 101 wie auch bei den Einrichtungen 81 , 91 gemäß Fig. 8 und Fig. 9 können z.B., ähnlich wie in Fig. 6 und Fig. 7 gezeigt, zusätzliche Befestigungsmittel zum Befestigen der Einrichtung an dem Gepäckträger des Fahrrads vorgesehen sein. Zum Befestigen werden schnell lösbare Einrichtungen und/oder Verschlüsse, wie z. B. Klettverschlüsse, Haken und Clips, bevorzugt. Fig. 12 zeigt ein Hinterrad 125, an dessen Achse 122 beidseits des Rades 125 Rahmenteilen 124a, 124b befestigt sind, die einen Gepäckträger 127 oberhalb des Rades 125 abstützen.
Oben auf dem Gepäckträger 127 sind Haltemittel 5, 9 (z. B. wie bereits anhand von anderen Figuren beschrieben) angeordnet und am Gepäckträger 127 befestigt. An den Haltemittel 5, 9 ist beidseits des Rades 125 jeweils ein Band 121 a, 121 b befestigt, das das Gewicht einer plattenförmigen Schutzeinrichtung 61 a, 61 b zumindest teilweise trägt. Wie nicht mehr dargestellt ist, kann das plattenförmige Element 61 a, 61 b jeweils noch über weitere Befestigungsmittel z. B. an den Rahmenteilen 124a, 124b befestigt sein.

An den plattenförmigen Elementen 61a, 61 b ist jeweils ein Abstandshalter 128a, 128b ausgebildet, der innenseitig, zum Rad 125 weisend angeordnet ist und sich an jeweils einem der Rahmenteile 124a, 124b abstützt. Auf der rechten Seite des Rades 125 ist schematisch die Position und Ausdehnung von Teilen einer Gangschaltung 123 dargestellt, die aber auch tiefer, auf Höhe der Achse 122 liegen können. Man erkennt, dass der Abstandshalter 128b einen Kontakt zwischen dem plattenförmigen Element und der Gangschaltung 123 verhindert.

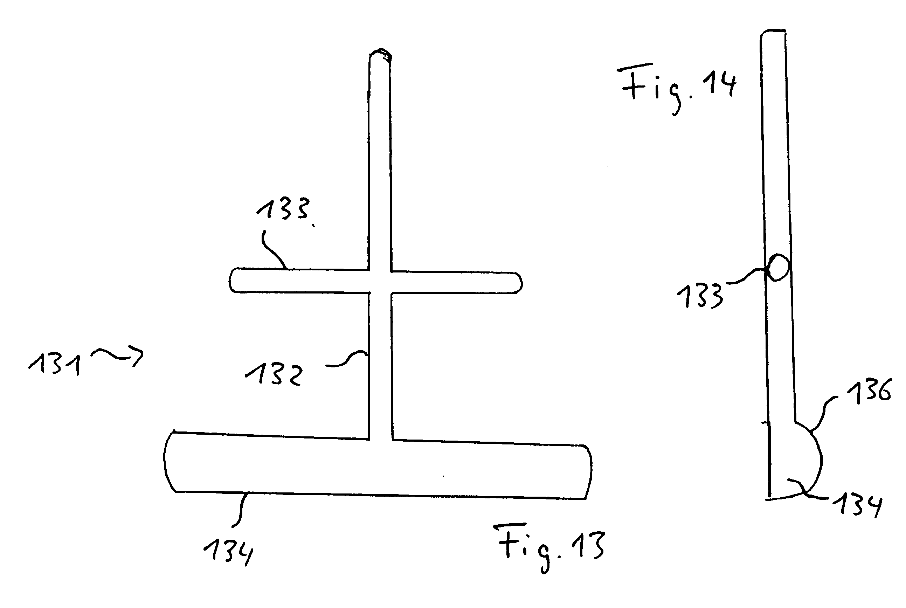

Das plattenförmige Element 131 (siehe Fig. 13 und 14) ist eine Stabkonstruktion. Ein in vertikaler Richtung verlaufender erster Stab 132 wird etwa in seiner Mitte von einem zweiten, in horizontaler Richtung verlaufenden Stab 133 gekreuzt. Am unteren Ende des ersten Stabes 132 befindet sich ein weiterer Stab 134, der sich in horizontaler Richtung erstreckt. Dieser untere Stab 134 ist als Abstandshalter 136 ausgebildet (wie Fig. 14 zeigt), da er im Vergleich zu den Stäben 132, 133 nach rechts vorspringt. Die rechte Seite ist im montierten Zustand dem Rad zugewandt, sodass der Stab 134 sich an Rahmenteilen des Fahrrades abstützt.

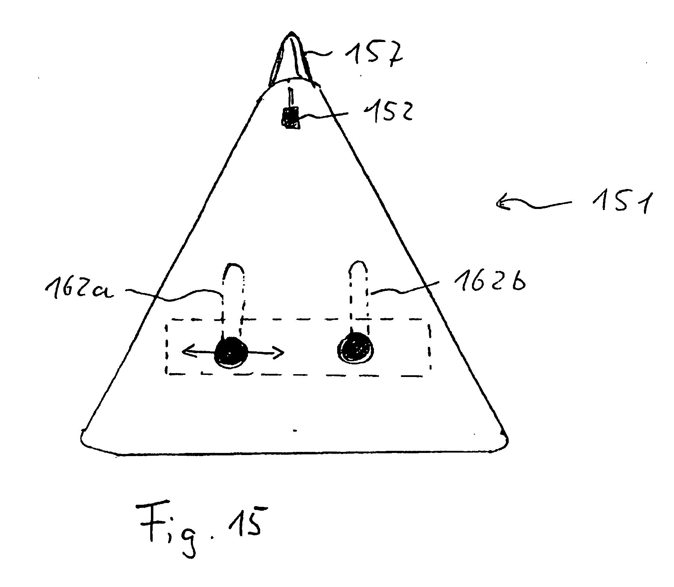

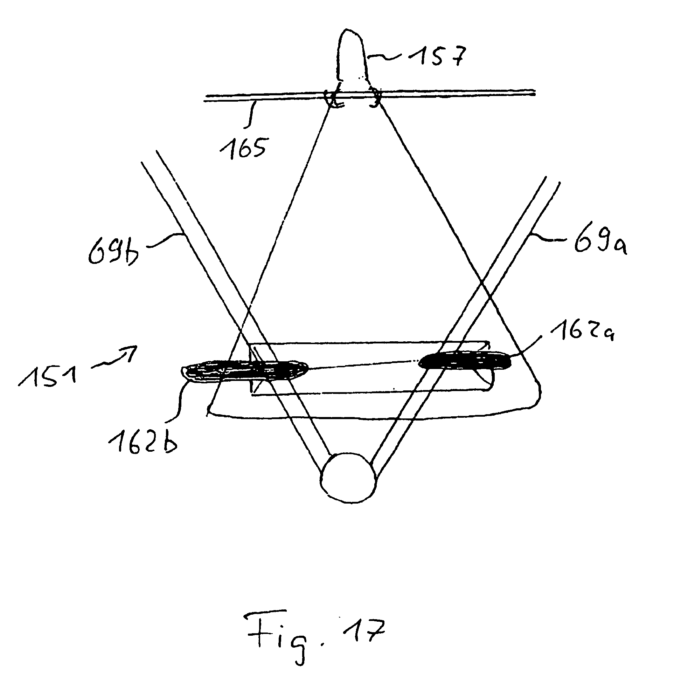

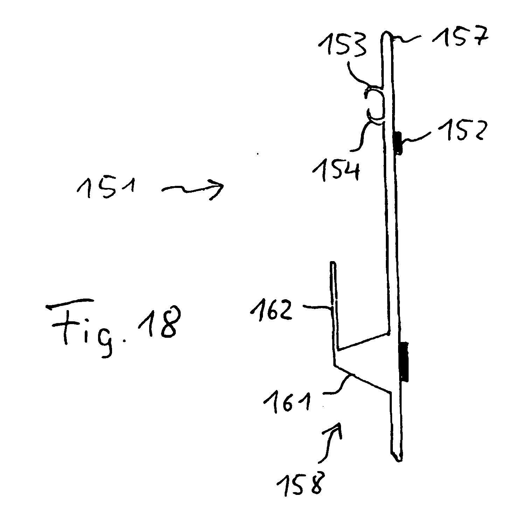

Fig. 15 - 18 zeigen eine weitere Ausführungsform 151 eines plattenförmigen Elementes. Sie weist an der Innenseite wiederum einen Abstandshalter 158 auf. An ihrem oberen Ende befindet sich ein nach oben abragender Vorsprung 157, an dem Taschen aufgehängt werden können. Außerdem befindet sich im Bereich ihres oberen Endes eine Befestigungseinrichtung zur Befestigung an an einer Längsstrebe eines Gepäckträgers. Die Befestigungseinrichtung ist klammerartig ausgestaltet und weist eine oberes 153 und ein unteres 154 Element auf. Im montierten Zustand greifen die Elemente 153, 154 ein Gepäckträgerteil (siehe Fig. 17) 165, das untere Element von unten, das obere Element von oben. Das untere Element 154 ist gegen das obere Element 153 beweglich, d.h. der Griff kann geschlossen und geöffnet werden. Zur Betätigung des unteren Elements 154 kann ein Griff oder ein anderes Betätigungselement 152 vorgesehen sein, das von der Außenseite betätigbar ist. Das Betätigungselement 152 kann in den plattenförmigen Bereich des plattenförmigen Elements 151 integriert sein, damit es nicht mit aufgehängten Taschen kollidiert und unbeabsichtigt betätigt wird, das Betätigungselement ist z. B. als verschiebbarer Knopf ausgestaltet.

Der Abstandshalter 158 ist in besonderer Weise ausgestaltet. Diese Ausgestaltung kann auch nicht nur bei dem speziell in Fig. 15 bis Fig. 18 dargestellten plattenförmigen Element vorgesehen sein, sondern auch bei anderen Ausführungsformen.

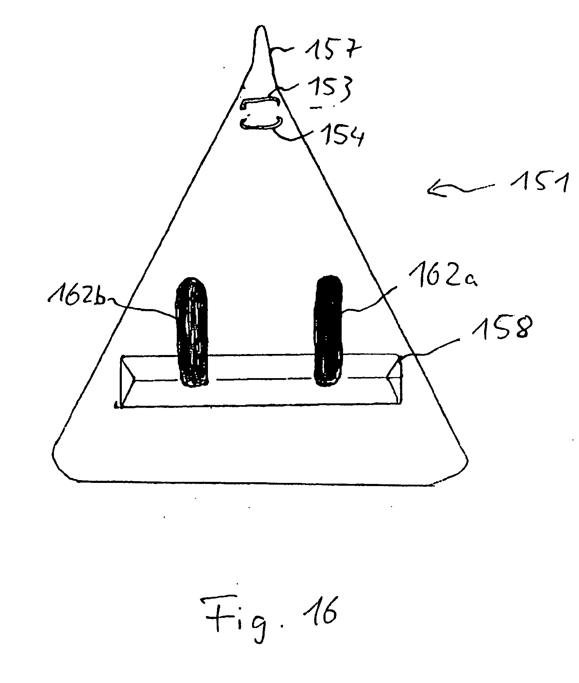

Der Abstandshalter 158 weist wie auch andere Ausführungsformen von Abstandshaltem einen an der Innenseite vorspringenden Bereich 161 auf, der die Abstandsfunktionen gewährleistet. An dem vorspringenden Bereich befinden sich jedoch zwei verschwenkbare Elemente 162a, 162b, die jeweils um eine etwa senkrecht zur Oberfläche des plattenförmigen Elements 151 verlaufende Drehachse verschwenkt werden können. Dabei setzen die Elemente 162 jeweils an derjenigen Stelle des vorspringenden Bereichs 161 an, die am weitesten in Richtung Rad vorspringt. Bei der Montage des plattenförmigen Elements 151 befinden sich die verschwenkbaren Elemente 162 zunächst in einer mit ihren freien Enden nach oben weisenden Position (Fig. 16). Dann werden die Elemente 162 so verschwenkt, dass sie jeweils ein stabförmiges Gepäckträgerteil 69a, 69b des Fahrrades hintergreifen (Fig. 17). Bei den Gepäckträgerteilen 69 handelt es sich z. B. um die bereits bei der Beschreibung von Fig. 6 erwähnten Teile. Die Schwenkstellung in der montierten Position kann abhängig von dem jeweiligen Fahrrad variieren. Auf diese Weise kann das plattenförmige Element an die Fahrradkonstruktion angepasst werden.

Ferner ist es möglich, dass die Positionen, an denen die Elemente 162 am Material des plattenförmigen Elements ansetzen, vorstellbar sind. Dies ist in Fig. 15, durch zwei Pfeile in horizontaler Richtung am Ansatz des Elements 162a angedeutet. Es können aber auch die Positionen beider Elemente einstellbar sein.

Abweichend von der hier beschriebenen Ausführungsform kann ein plattenförmiges Element auch lediglich ein verschwenkbares Element aufweisen, oder mehr als zwei solche Elemente. Auch ist es möglich, dass zumindest ein verschwenkbares Element nicht an der am weitesten vorspringenden Stelle eines Abstandshalters ansetzt, sondern an einer anderen Stelle des plattenförmigen Elements.

Verschwenkbare Elemente sichern besonders zuverlässig den Sitz des erfindungsgemäßen plattenförmigen Elements an einem Fahrrad.

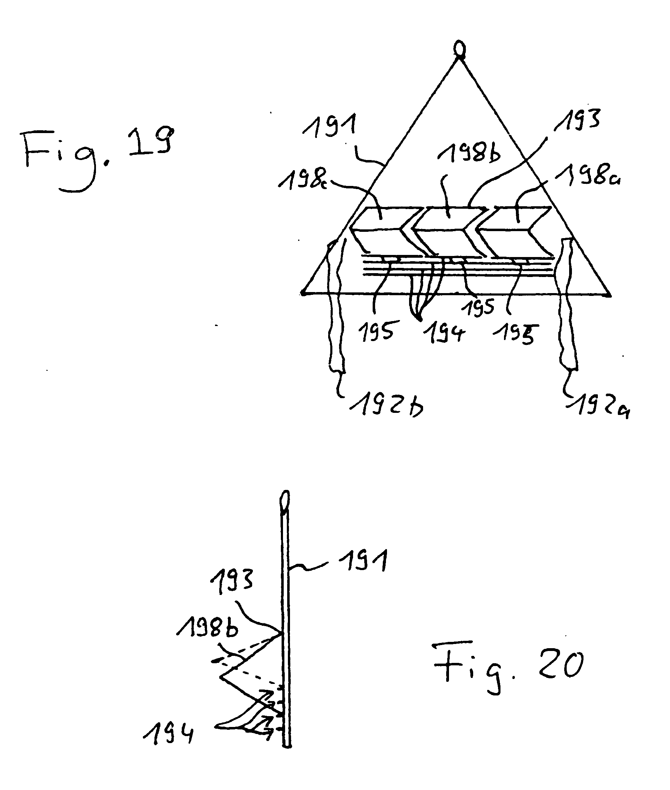

Fig. 19 zeigt ein plattenförmiges Element 191 mit einem dreiteiligen Abstandshalter 198, dessen drei Teile mit den Bezugszeichen 198a, 198b und 198c bezeichnet sind. Wie aus Fig. 20 erkennbar ist, haben die drei Teile 198 jeweils einen abgewinkelten Verlauf, wobei sie in einem oberen Bereich fest mit dem plattenförmigen Element 191 verbunden sind und wobei sie in einem tiefer liegenden, unteren Bereich wahlweise an verschieden hohen Positionen 194 an dem plattenförmigen Element fixiert werden können. Mit einer gestrichelte Linie zeigt Fig. 20 einen Zustand, in dem das Teil 198b an der obersten möglichen Position 194 an dem plattenförmigen Element 191 fixiert ist. Mit durchgezogenen Linien zeigt Fig. 20 einen Zustand, in dem das Teil 198b an der zweit untersten möglichen Position 194 an dem plattenförmigen Element 191 fixiert ist. Dementsprechend ist der Abstand der Spitze (wo das Teil 198b abgewinkelt ist) zu dem plattenförmigen Element 191 in dem mit gestrichelten Linien dargestellten Zustand größer als in dem anderen dargestellten Zustand.

Z. B. können die verschieden hohen Positionen 194 durch Schlitze in dem plattenförmigen Element 191 realisiert werden, in die ein Vorsprung 195 des Teils 198 eingesteckt wird. Andere Gestaltungen sind möglich, z. B. die Abstützung des Teils 198 auf einem Vorsprung des plattenförmigen Elements 191, wobei diese abstützende Verbindung vorzugsweise kraftschlüssig und/oder formschlüssig gegen ein unbeabsichtigtes Lösen gesichert ist.

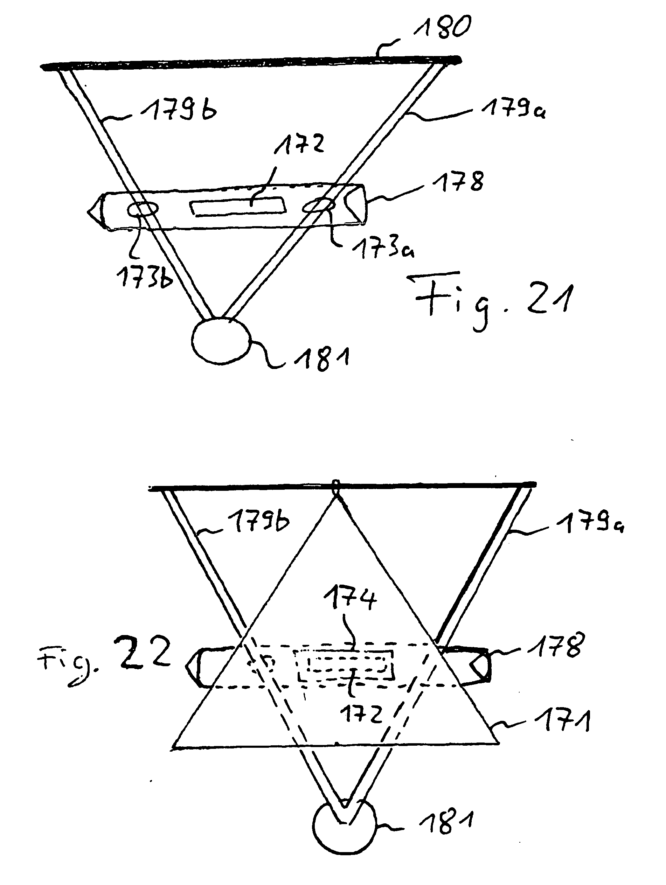

Fig. 21 zeigt in einer Seitenansicht zwei Stäbe 179a, 179b, die sich von einem Fahrradgepäckträger 180 nach unten zu einer Nabe 181 erstrecken. An den Stäben 179 ist jeweils über einen Verbindungsbereich 173a, 173b ein Abstandshalter 178 angebracht, sodass der Abstandshalter 178 in seiner momentanen vertikalen Position fixiert ist. Allerdings kann die vertikale Position eingestellt werden, z. B. indem der horizontale Abstand der Verbindungsbereiche 173 verändert wird. Bei einem geringeren horizontalen Abstand wird der Abstandshalter 178 an einer tieferen vertikalen Position fixiert und umgekehrt.

Der Abstandshalter 178 hat an seiner nach außen weisenden, annähernd ebenen Oberfläche zwischen den Verbindungsbereichen 173 einen Befestigungsbereich 172 (z. B. der eine Teil eines Klettverschlusses). In Fig. 22, die die Ansicht von außen auf das Fahrrad zeigt, sind die verdeckten, hinter dem plattenförmigen Element 171 liegenden Teile mit gestrichelten Linien dargestellt. An dem plattenförmigen Element 171 ist ein zweiter Befestigungsbereich 174 angeordnet (z. B. der andere Teil eines Klettverschlusses). Dabei kann die vertikale Position des zweiten Befestigungsbereichs 174 vorzugsweise zumindest einmal eingestellt werden, z. B. indem der Teil des Klettverschlusses in der gewünschten Höhe an der Innenseite des plattenförmigen Elements 171 aufgeklebt wird.

In dem montierten Zustand des plattenförmigen Elements 171 wirken die Befestigungsbereiche 172, 174 miteinander zusammen, sodass das plattenförmige Element an dem Befestigungsbereich 172 und damit an dem Abstandshalter 178 befestigt wird.

Z. B. hat der Abstandshalter 178 im Querschnitt ein dreieckförmiges (wie durch Dreiecke an seinen horizontal gegenüberliegenden Enden in Fig. 21 und 22 angedeutet) oder anderes (z. B. halbkreisförmiges) Profil. An seiner Innenseite stützt sich der Abstandshalter 178 entsprechend der Dicke des Profils an den Stäben 179.

## Patentansprüche

1. Anordnung zum Aufhängen von Taschen an einem Fahrrad (124, 127), wobei die Anordnung Folgendes aufweist:
zumindest ein plattenförmiges Element (61),
Befestigungsmittel (121) zum Befestigen des plattenförmigen Elements (61) an einem Gepäckträger des Fahrrads (124, 127), so dass das plattenförmige Element (61) in einem befestigten Zustand sich seitlich eines Rades (125) des Fahrrads (124, 127) von oben nach unten erstreckt, und
Haltemittel (5), zum Aufhängen einer Tasche, wobei die Haltemittel (5) im Bereich des oberen Endes des plattenförmigen Elements (61) oder darüber angeordnet sind, wobei das plattenförmige Element (61) mit einem daran ausgeformten und/oder daran angeordneten Abstandshalter (128) kombiniert ist, der sich in dem befestigten Zustand an der zum Rad (125) weisenden Innenseite des plattenförmigen Elements (61) befindet, so dass eine Außenfläche des plattenförmigen Elements (61) an der der Innenseite gegenüberliegenden Seite des plattenförmigen Elements (61) in der oberen Hälfte der vertikalen Längserstreckung des plattenförmigen Elements (61) einen kleineren Abstand von Rahmenteilen (124) des Fahrrads (124, 127) hat als in der unteren Hälfte und so dass sich eine Außenfläche des plattenförmigen Elements (61) in einer Richtung von oben nach unten erstreckt, die im befestigten Zustand einen spitzen Winkel von mindestens 5° mit der Vertikalen einschließt.

2. Anordnung nach dem vorhergehenden Anspruch, wobei die Haltemittel so ausgestaltet sind, dass die Tasche (10) an einem einzigen Aufhängepunkt aufgehängt ist.

3. Anordnung nach einem der vorhergehenden Ansprüche, wobei die Anordnung zwei plattenförmige Elemente (61 a, 61 b) aufweist, die in dem befestigten Zustand an einander gegenüberliegenden Seiten des Rades (125) angeordnet sind.

4. Anordnung nach dem vorhergehenden Anspruch, wobei die Haltemittel (5) Teil einer Verbindungseinrichtung sind und wobei die zwei plattenförmigen Elemente (61) über die Verbindungseinrichtung miteinander verbunden sind.

5. Anordnung nach einem der vorhergehenden Ansprüche, wobei das plattenförmige Element (61) über zumindest einen Teil der Befestigungsmittel (121) mit den Haltemitteln (5) verbunden ist.

6. Anordnung nach einem der vorhergehenden Ansprüche, wobei sich der Abstandshalter (128) in dem befestigten Zustand in der unteren Hälfte der vertikalen Längserstreckung des plattenförmigen Elements (61) befindet.

7. Anordnung nach einem der vorhergehenden Ansprüche, wobei das plattenförmige Element (61) eine annähernd ebene Außenfläche aufweist, die sich im befestigten Zustand gegenüber der Innenseite, die zum Rad (125) weist, des plattenförmigen Elements (61) befindet.

8. Anordnung nach einem der vorhergehenden Ansprüche, wobei das plattenförmige Element (151) im Bereich seines oberen Endes einen Vorsprung (157) aufweist, der das Haltemittel ist oder der ein Teil der Haltemittel ist.

9. Anordnung nach einem der vorhergehenden Ansprüche, wobei das plattenförmige Element (151) im Bereich seines oberen Endes eine Greifeinrichtung (153, 154) zum Greifen eines Fahrrad-Rahmenteils (165) aufweist, wobei die Greifeinrichtung (153, 154) das Befestigungsmittel ist oder Teil der Befestigungsmittel ist.

10. Anordnung nach einem der vorhergehenden Ansprüche, wobei die Befestigungsmittel ein lang gestrecktes elastisches Element (63) aufweisen, mit dem das plattenförmige Element (61) im befestigten Zustand an dem Rahmen (69) des Fahrrads fest gespannt ist.

11. Anordnung nach einem der vorhergehenden Ansprüche, wobei die Haltemittel eine Befestigungseinrichtung aufweisen, die ausgestaltet ist, die Haltemittel am Rahmen des Fahrrads zu befestigen.

12. Anordnung nach einem der vorhergehenden Ansprüche, wobei die Haltemittel einen elastischen Ring (34) aufweisen, an dem an gegenüberliegenden Seiten zumindest jeweils ein klammerartiger Vorsprung (33) angeordnet ist, wobei der Abstand der gegenüberliegenden klammerartigen Vorsprünge (33a, 33b) in einem entspannten Zustand des elastischen Rings (34) so bemessen ist, dass er kleiner ist als der Abstand von zwei quer zur Längsrichtung des Fahrrades voneinander beabstandeten Rahmenteilen, die sich in der Längsrichtung erstrecken, und wobei der elastische Ring (34) so verformbar ist, dass sich der Abstand der gegenüberliegenden Vorsprünge (33) vergrößert.

13. Anordnung nach einem der vorhergehenden Ansprüche, wobei das plattenförmige Element (61) in der vertikalen Richtung eine Länge von zumindest der Hälfte des Durchmessers eines 24 Zoll-Rades, d.h. von mindestens 30,5 cm hat.

14. Anordnung nach einem der vorhergehenden Ansprüche, wobei das plattenförmige Element (151) an einer im montierten Zustand zum Rad weisenden Seite zumindest ein verschwenkbares Element (162a, 162b) aufweist, das um eine etwa senkrecht zur Oberfläche des plattenförmigen Elements (151) verlaufende Drehachse verschwenkbar ist.

## Claims

1. An arrangement for hanging bags from a bicycle (124, 127), in which the arrangement has the following:
at least one plate-like element (61),
securing means (121) for securing the plate-like element (61) to a rack of the bicycle (124, 127) such that in a secured condition the plate-like element (61) extends to the side of a wheel (125) of the bicycle (124, 127) from the top downward, and
holding means (5) for hanging a bag, with the holding means (5) being arranged in the region of the upper end of the plate-like element (61) or above it, in which the plate-like element (61) is combined with a spacer (128) which is formed out of the latter and/or arranged thereon and which in the secured condition is located on the inner side of the plate-like element (61), that facing the wheel (125), such that an outer surface of the plate-like element (61) on that side of the plate-like element (61) that is opposed to the inner side has a smaller spacing from frame parts (124) of the bicycle (124, 127) in the upper half of the vertical longitudinal extent of the plate-like element (61) than in the lower half, and such that an outer surface of the plate-like element (61) extends from the top downward in a direction that forms an acute angle of at least 5° with the vertical in the secured condition.

2. The arrangement according to the preceding claim, in which the holding means (5) are constructed such that the bag (10) is hung from a single hanging point.

3. The arrangement according to one of the preceding claims, in which the arrangement has two plate-like elements (61a, 61b) which in the secured condition are arranged on mutually opposing sides of the wheel (125).

4. The arrangement according to the preceding claim, in which the holding means (5) are part of a connection device, and in which the two plate-like elements (61) are connected to one another by way of the connection device.

5. The arrangement according to one of the preceding claims, in which the plate-like element (61) is connected to the holding means (5) by way of at least part of the securing means (121).

6. The arrangement according to one of the preceding claims, in which in the secured condition the spacer (128) is located in the lower half of the vertical longitudinal extent of the plate-like element (61).

7. The arrangement according to one of the preceding claims, in which the plate-like element (61) has an approximately planar outer surface which in the secured condition is opposed to the inner side of the plate-like element (61), that facing the wheel (125).

8. The arrangement according to one of the preceding claims, in which the plate-like element (151) has in the region of its upper end a projection (157) which is the holding means or is part of the holding means.

9. The arrangement according to one of the preceding claims, in which the plate-like element (151) has in the region of its upper end a grasping device (153, 154) for grasping a bicycle frame part (165), in which the grasping device (153, 154) is the securing means or part of the securing means.

10. The arrangement according to one of the preceding claims, in which the securing means have an elongate elastic element (63) by means of which the plate-like element (61) is clamped to the frame (69) of the bicycle in the secured condition.

11. The arrangement according to one of the preceding claims, in which the holding means have a securing device which is constructed to secure the holding means to the frame of the bicycle.

12. The arrangement according to one of the preceding claims, in which the holding means have an elastic ring (34) on which at least one respective clamp-like projection (33) is arranged on opposing sides, in which the spacing between the opposing clamp-like projections (33a, 33b) is of a size in a relaxed condition of the elastic ring (34) such that it is smaller than the spacing between two frame parts which are spaced from one another transversely to the longitudinal direction of the bicycle and which extend in the longitudinal direction, and in which the elastic ring (34) is deformable such that the spacing between the opposing projections (33) increases.

13. The arrangement according to one of the preceding claims, in which the plate-like element (61) has a length of at least half the diameter of a 24" wheel in the vertical direction, that is at least 30.5 cm.

14. The arrangement according to one of the preceding claims, in which the plate-like element (151) has, on a side facing the wheel in the mounted condition, at least one pivotal element (162a, 162b) which is pivotal about an axis of rotation that extends approximately perpendicular to the surface of the plate-like element (151).

## Revendications

1. Un arrangement pour accrocher des sacs à un vélo (124, 127), l'arrangement comportant ce qui suit:
au moins un élément en plate-forme (61),
des moyens d'attache (121) pour attacher l'élément en plate-forme (61) à un porte-bagage du vélo (124, 127) de façon que l'élément en plate-forme (61) s'étend sur le côté d'une roue (125) du vélo (124, 127) de haut en bas dans un état attaché, et
des moyens de support (5) pour accrocher un sac, dans lequel les moyens de support (5) sont arrangés dans la région de l'extrémité supérieure de l'élément en plate-forme (61) ou là-dessus, dans lequel l' élément en plate-forme (61) est combiné avec un écarteur (128) qui est formé à lui-même ou arrangée à lui-même et qui est situé dans l'état attaché au côté intérieur de l'élément en plate-forme (61) indiquant vers la roue (125) de façon qu'une superficie extérieure de l'élément en plate-forme (61) a au côté de l'élément en plate-forme (61) qui est opposé au côté intérieur dans la moitié supérieure de la verticale extension en long de l'élément en plate-forme (61) une distance des parts du cadre (124) du vélo (124, 127) plus petite que dans la moitié inférieure et de façon qu'une superficie extérieure de l'élément en plate-forme (61) s'étend dans une direction de haut en bas comprenant dans l'état attaché un angle aigu d'au moins 5° avec la verticale.

2. L'arrangement selon la revendication précédente, dans lequel les moyens de support (5) sont construits de façon que le sac (10) est accroché par un seul point d'accrochement.

3. L'arrangement selon l'une des revendications précédentes, l'arrangement comportant deux éléments en plate-forme (61 a, 61 b) qui sont arrangés dans l'état attaché aux côtés de la roue (125) qui sont opposés mutuellement.

4. L'arrangement selon la revendication précédente, dans lequel les moyens de support (5) font partie d'un équipement de raccordement et dans lequel les deux éléments en plate-forme (61) sont reliés ensemble via l' équipement de raccordement.

5. L'arrangement selon l'une des revendications précédentes, dans lequel l'élément en plate-forme (61) est connecté via au moins une partie des moyens d'attache (121) avec les moyens de support (5).

6. L'arrangement selon l'une des revendications précédentes, dans lequel l'écarteur (128) est situé dans l'état attaché à la moitié inférieure de la verticale extension en long de l'élément en plate-forme (61).

7. L'arrangement selon l'une des revendications précédentes, dans lequel l'élément en plate-forme (61) a une superficie extérieure approximativement plane qui est située dans l'état attaché en face du côté intérieur de l'élément en plate-forme (61) indiquant vers la roue (125).

8. L'arrangement selon l'une des revendications précédentes, dans lequel l'élément en plate-forme (151) a dans la région de son extrémité supérieure un épaulement (157) qui est le moyen de support ou un part des moyens de support.

9. L'arrangement selon l'une des revendications précédentes, dans lequel l'élément en plate-forme (151) a dans la région de son extrémité supérieure un équipement à grappin (153, 154) pour saisir un part du cadre du vélo (165), dans lequel l'équipement à grappin (153, 154) est le moyen de support ou un part des moyens de support.

10. L'arrangement selon l'une des revendications précédentes, dans lequel les moyens d'attache ont un élément élastique étendu en long (63) avec lequel l'élément en plate-forme (61) est serré fermement au cadre (69) du vélo dans l'état attaché.

11. L'arrangement selon l'une des revendications précédentes, dans lequel les moyens de support ont un équipement d'attache qui est formé pour attacher les moyens de support au cadre du vélo.

12. L'arrangement selon l'une des revendications précédentes, dans lequel les moyens de support ont un anneau élastique (34) auquel respectivement au moins un épaulement de type clip (33) est arrangé aux côtés opposés, dans lequel la distance des épaulements opposés de type clip (33a, 33b) est déterminée dans un état décontracté de l'anneau élastique (34) de façon qu'elle est plus petite que la distance de deux parts du cadre qui sont distants l'un de l'autre transversalement à la direction longitudinale du vélo et qui s'étendent dans la direction longitudinale et dans lequel l' anneau élastique (34) est déformable de façon que la distance des épaulements opposés (33) s'agrandit.

13. L'arrangement selon l'une des revendications précédentes, dans lequel l'élément en plate-forme (61) a dans la direction verticale une longueur d'au moins la moitié du diamètre d'un vélo de 24 pouces soit au moins 30,5 cm.

14. L'arrangement selon l'une des revendications précédentes, dans lequel l'élément en plate-forme (151) a à un côté indiquant vers la roue dans l'état assemblé au moins un élément pivotant (162a, 162b) qui est pivotant à un pivot passant à peu près perpendiculaire à la surface de l'élément en plate-forme (151).
